(19) Europäisches Patentamt
European Patent Office
Office européen des brevets

(11) EP 2 443 934 B1

(12) EUROPEAN PATENT SPECIFICATION

(45) Date of publication and mention of the grant of the patent:
**14.10.2015 Bulletin 2015/42**

(51) Int Cl.:
***A23C 19/16*** (2006.01)

(21) Application number: **11186532.5**

(22) Date of filing: **25.10.2011**

(54) **Use of a sugar fatty acid ester as a fungicide in the surface treatment of cheese**

Verwendung von Zucker-Fettsäure-Ester als Fungizid bei der Behandlung von Käse

Utilisation d'un ester d'acide gras de sucre en tant que fongicide dans le traitement de surface du fromage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 NL 2005567**

(43) Date of publication of application:
**25.04.2012 Bulletin 2012/17**

(73) Proprietor: **CSK Food Enrichment B.V.**
**8938 AS Leeuwarden (NL)**

(72) Inventors:
- **Koopmans, Wieger Jan**
  **8911 ET Leeuwarden (NL)**
- **Kevelam, Jan**
  **6718 HR Ede (NL)**
- **Meijer, Willem Cornelis**
  **6712 HA Ede (NL)**
- **Hijlkema, Tette**
  **8403 BH Jonkerslän (NL)**

(74) Representative: **Nederlandsch Octrooibureau**
**P.O. Box 29720**
**2502 LS The Hague (NL)**

(56) References cited:
**EP-A1- 0 513 922    EP-A1- 0 986 965**
**EP-A1- 1 980 162    EP-A1- 2 044 836**
**JP-A- 62 258 303**

- **DATABASE WPI Week 198537 Thomson Scientific, London, GB; AN 1985-227663 XP002649595, & JP 60 149371 A (MORINAGA & CO LTD) 6 August 1985 (1985-08-06)**
- **MARSHALL DL ET AL: "Antimicrobial Activity of Sucrose Fatty Acid Ester Emulsifiers", JOURNAL OF FOOD SCIENCE, WILEY-BLACKWELL PUBLISHING, INC, US, vol. 51, no. 2, 1 January 1986 (1986-01-01), pages 468-470, XP008084251, ISSN: 0022-1147, DOI: DOI:10.1111/J. 1365-2621.1986.TB11157.X**

## Description

### Field of the invention

The present invention relates to a method for reducing or preventing fungal growth on the surface of cheese comprising the use of fatty acid esters.

### Background of the invention

For more than 30 years, natamycin has been used to prevent growth of fungi on foodstuffs, especially on cheese. Usually, cheeses are treated by immersion in an aqueous suspension of natamycin or treated with a water-borne cheese coating composition containing natamycin. The natamycin concentration in the aqueous suspension is typically 500-5000 ppm with respect to the suspension. The natamycin concentration in the cheese coating composition is typically 100-750 ppm with respect to the composition. An example of a commercially available cheese coating composition, which comprises natamycin in an amount of 200 ppm, is Ceska® WL 200.03.45, *ex* CSK Food Enrichment, Leeuwarden, The Netherlands. This cheese coating composition comprises a poly(vinyl acetate) copolymer emulsion as the main film-forming ingredient.

Despite its success as a food-grade fungicide in the past, spoilage of natamycin-treated foodstuffs by fungi still occurs from time to time. This spoilage is especially due to fungi which have a relatively high resistance against natamycin, such as *Penicillium echinulatum* var. *discolor,* hereinafter also called *Penicillium discolor.* EP 1 642 500 aims to improve the antifungal effect of natamycin against this and other fungal species by providing natamycin in a form which shows an *enhanced release profile.* Example 19 of EP 1 642 500 shows higher release rates from a Plasticoat®) emulsion prepared by prior dissolving alpha-natamycin in a solvent system in comparison with a Plasticoat® emulsion prepared by adding alpha-natamycin in the same amount from an aqueous suspension.

In a different approach to deal with fungal species having a higher tolerance towards the fungicide, WO 2004/082407 aims to increase the amount of a *dissolved* polyene fungicide, such as natamycin, in an aqueous system. Most commercial aqueous preparations comprising natamycin have a pH of between 4 and 8; the solubility of natamycin in these systems is in the range of 40-60 ppm. WO 2004/082407 provides an aqueous composition which comprises dissolved natamycin in an amount of at least 100 ppm, even at moderate pH values (5-8). The solubility of the natamycin is increased by the presence of a solubilizer, such as sodium dodecyl sulphate or Tween 20, Tween 60 or Tween 80.

EP 1 980 162 provides compositions with film-forming properties based on palmitic, lauric and stearic fatty acid esters with sucrose to substitute preservatives and polymeric coatings for coating amongst others cheese.

### Summary of the invention

The present inventors believe that the approaches taken in EP 1 642 500 and in WO 2004/082407 for dealing with fungal species having a higher fungicide tolerance may suffer from unwanted by-effects. In particular, the present inventors believe that a continued (industrial) treatment of foodstuffs with fungicidal compositions comprising natamycin as the sole fungicidally active component, especially in a form having an enhanced release profile or comprising an enhanced amount of dissolved natamycin may eventually result in the survival or evolution of fungal strains on said foodstuffs having a *further* increased resistance to the natamycin, or any other polyene fungicide, as the case may be. Thus, there is a need for fungicidal compositions for the surface treatment of cheese which, whilst being effective towards fungal species having a relatively high natamycin tolerance, such as *Penicillium discolour,* may nevertheless comprise natamycin in a reduced amount or even no natamycin at all.

Surprisingly, it has been found that this need is met by providing a method for reducing or preventing fungal growth on the surface of a cheese comprising contacting the cheese with an aqueous composition comprising a sugar fatty acid ester in combination with a coating polymer. Herein the expression "sugar fatty acid ester" is known to the skilled person and preferably relates to the esterification product of a sugar and a fatty acid ester.

Notably, it was found that a number of other fatty acid-based surfactants including Tween 80 (*i.e.* polyoxyethylene (20) sorbitan monooleate) did not inhibit but even promoted growth of spoilage fungi for cheese (see below). This finding further illustrates the surprising and unique antifungal properties of the sugar fatty acid esters.

The sugar fatty acid ester may be present in relatively small amounts in order to exert a significant antifungal effect. Typical concentrations of the sugar fatty acid ester amount to 250-10000 ppm with respect to the weight of the aqueous composition, more preferably 500-10000 ppm or most preferably 750-5000 ppm. In addition it was found that the polymer coating adhered exceptionally well to the cheese.

The invention thus concerns an aqueous cheese coating composition comprising (1) an emulsion polymer of a vinylic ester and optionally further comonomer(s), and (2) optionally natamycin in an amount of 100 ppm or less, more preferably 75 ppm, most preferably 50 ppm or less, and (3) 250-10000 ppm of a sugar fatty acid ester, with respect to the weight of the aqueous composition. Herein, the term "emulsion polymer" is known to the skilled person and is preferably defined as "a polymer obtainable by emulsion polymerisation". Said aqueous cheese coating composition is especially suitable for use as the "aqueous composition" in the claimed method since the fungicidal effect of the sugar fatty acid ester is enhanced by the further protective effect of the polymer coating.

The invention further provides a method for coating a cheese comprising contacting the cheese with the aqueous composition according to the present ivnention. Preferably the method is for reducing or preventing fungal growth on the surface of a cheese.

The invention further provides a cheese obtainable by coating said cheese with the aqueous cheese coating composition, preferably followed by drying of the aqueous cheese coating composition. The cheese is preferably of the semi-hard or hard type. Most preferably, the cheese is a Gouda cheese, an Edam cheese, or a Maasdam cheese.

**Detailed description of the invention**

Definitions. Unless otherwise indicated, the expression "a" has the meaning "one or more".

The sugar fatty acid ester. The sugar fatty acid ester preferably has a HLB value ranging from 10-19, more preferably ranging from 13-17, most preferably ranging from 14-16. Herein the dash sign ("-") has the meaning of "up to and including." The term "HLB value" is known to the skilled person and is preferably calculated according to the empirical formula established by J. T. Davies, Proc. Intl. Congress of Surface Activity, Vol. 1, 1957, pp. 426-438 which is incorporated by reference herein:

$$HLB = 7 + m * Hh - n * Hl;$$

wherein

M = number of hydrophilic groups in the molecule

Hh = empirically derived group number assigned by Davies for the hydrophilic group n - number of lipophilic groups in the molecule

Hl - empirically derived group number assigned by Davies for the lipophilic groups

For example, according to this equation, sucrose monostearate has a HLB of 16.

In commercial practice, the sugar fatty acid ester may relate to a mixture of esters, in particular to a mixture of mono-, di-, tri- and/or polyesters. Preferably at least 50 wt.%, more preferably at least 60wt.%, yet more preferably at least 70wt.% or at least 80wt.% with regard to the total amount of the sugar fatty acid ester is present as a fatty acid monoester. The term mono-, di-, tri- ester etc. is known to the skilled person. As an example, in a fatty acid monoester the sugar molecule is esterified through only one of its hydroxy groups with one molecule of a fatty acid. If the aqueous composition comprises a mixture of sugar fatty acid esters, the indicated preferred HLB values relate to the weight-averaged HLB value for all individual sugar fatty acid esters.

The sugar is preferably selected from the group consisting of sucrose, ribose, mannose, glucose, fructose, xylose, arabinose, lactose, melibiose, galactose, mannose, raffinose and cellobiose. Most preferably, the sugar is sucrose.

The fatty acid is preferably selected from a C8-C24 fatty acid, most preferably as a C12-C18 fatty acid. The fatty acid is even more preferably selected from the group consisting of lauric (*i.e.* dodecanoic) acid, myristic (*i.e.* tetradecanoic) acid, palmitic (*i.e.* hexadodecanoic) acid, stearic (*i.e.* octadodecanoic) acid and oleic (*i.e.* (9Z)-Octadec-9-enoic) acid. The fatty acid is most preferably selected as palmitic (i.e. hexadodecanoic) acid. Mixtures of various fatty acids may also be used.

Very good results are obtained if the sugar fatty acid ester is present in an amount of 250-10000 ppm or more preferably 500-10000 ppm with respect to the total weight of the aqueous composition. It is especially preferred that between 50-100 wt.% more preferably between 60-100 wt.% or especially between 70-100 wt.% of the total sugar fatty acid ester is present as a sugar fatty acid mono-ester. It is most preferred that the aqueous composition comprises between 250-10000 ppm or especially between 500-10000 ppm of one or more compounds selected from the group consisting of sucrose monolaurate, sucrose monomyristate, sucrose monopalmitate, sucrose monostearate and sucrose mono-oleate; yet even more preferably the aqueous composition comprises between 250-10000 ppm or especially between 500-10000 ppm of sucrose monopalmitate. Sucrose monopalmitate has been shown to give excellent fungicidal effects against *Penicillium discolour* and is especially preferred. It is further preferred that the total concentration of the sugar fatty acid ester in the aqueous composition is 10000 ppm (i.e. 1 wt.%) or less with respect to the total weight of the aqueous composition, more preferably 5000 ppm or less. High concentrations of the sugar fatty acid ester may negatively affect organoleptic properties of the cheese treated with the aqueous composition. Furthermore too high concentrations of the sugar fatty acid ester may negatively affect processability of the aqueous composition.

The aqueous cheese coating composition

The aqueous cheese coating composition comprises at least the emulsion polymer of the vinylic ester and optionally further comonomer(s). Accordingly, very favourable mechanical protection can be provided to a cheese coated therewith. The aqueous cheese coating composition comprises the emulsion polymer in an amount of 10-60 wt.%, more preferably in an amount of 30-50 wt.% based on the total weight of the aqueous cheese coating composition. Accordingly, especially favorable protection can be provided to the cheese against mechanical damage which further helps to prevent fungal spoilage. Optionally, the aqueous cheese coating composition comprises the emulsion polymer in addition to the gum and/or the cellulose derivative. Accordingly viscosity of the cheese coating composition can be easily adjusted.

The emulsion polymer is preferably obtainable by emulsion polymerization of a vinylic ester of an aliphatic saturated monocarboxylic acid having a chain length of $C_1$-$C_{18}$ and preferably one or more further comonomers selected from the group consisting of (1) a diester of an alkanol having a chain length of $C_1$-$C_{18}$ and a monoethylenically unsaturated $C_2$-$C_{12}$ dicarboxylic acid, (2) an acrylic ester of an alkanol having a chain length of $C_1$-$C_{18}$, a (meth)acrylic ester of an alkanol having a chain length of $C_1$-$C_{18}$, and (3) an alpha-olefin having a chain length of $C_2$-$C_{18}$. Herein, a preferred alpha-olefin is ethylene. The vinylic ester of an aliphatic saturated monocarboxylic acid having a chain length of $C_1$-$C_{18}$ is preferably selected as vinyl propionate or, most preferably, as vinyl acetate.

This emulsion polymer is further preferably a copolymer obtainable by emulsion polymerization of:

a. 40 to 97 parts by weight of a monomer selected from the group consisting of a vinylic ester of an aliphatic saturated monocarboxylic acid having a chain length of $C_1$-$C_6$, an acrylic ester of an alkanol having a chain length of $C_1$-$C_6$, and a methacrylic ester of an alkanol having a chain length of $C_1$-$C_6$; and

b. 3-60 parts by weight of a monoethylenically unsaturated monomer selected from the group consisting of a maleic mono- and/or diester of an alkanol having a chain length of $C_1$-$C_{18}$, a fumaric mono- and/or diester of an alkanol having a chain length of $C_1$-$C_{18}$, an acrylic ester of an alkanol having a chain length of $C_1$-$C_{18}$, a methacrylic ester of an alkanol having a chain length of $C_1$-$C_{18}$, an alpha-olefin having a chain length of $C_2$-$C_{18}$, acrylic acid, methacrylic acid, and itaconic acid.

Preferably, the monounsaturated $C_2$-$C_{12}$ dicarboxylic acid is maleic acid or fumaric acid, or a mixture thereof. The monomer mixture may comprise or further comprise a monoethylenically unsaturated $C_2$-$C_{12}$ mono- or dicarboxylic acid or a salt thereof, or a mixture thereof. The mono-ethylenically unsaturated $C_2$-$C_{12}$ mono- or dicarboxylic acid is preferably selected from the group consisting of acrylic acid, methacrylic acid, itaconic acid, fumaric acid, maleic acid, a maleic mono-ester of an alkanol having a chain length of $C_1$-$C_{18}$, and a fumaric mono-ester of an alkanol having a chain length of $C_1$-$C_{18}$.

It is preferred that the vinylic ester of an aliphatic saturated monocarboxylic acid having a chain length of $C_1$-$C_6$ is vinyl acetate. Regarding the monomers under (a.), the (meth)acrylic ester of an alkanol having a chain length of $C_1$-$C_{18}$ is preferably selected as methyl (meth)acrylate. Regarding the monomers under (b.), it is preferred that the alkanol having a chain length of $C_1$-$C_{18}$ is preferably selected as propanol, butanol, pentanol, hexanol or octanol, or as a mixture thereof, and is most preferably selected as (n-)butanol. The alpha-olefin is preferably selected as ethylene or as octene or as a mixture thereof. The acrylic ester of an alkanol having a chain length of $C_1$-$C_{18}$ is preferably selected as *(n-)*butyl acrylate. The diester of an alkanol having a chain length of $C_1$-$C_{18}$ and a monoethylenically unsaturated $C_2$-$C_{12}$ dicarboxylic acid is preferably selected as dibutylmaleate or dibutylfumarate, or as a mixture thereof.

The emulsion polymer is most preferably obtainable by emulsion polymerization of a monomer mixture comprising (1) vinyl acetate and dibutylmaleate, (2) vinyl acetate and ethylene), or (3) vinyl acetate and n-butylacrylate, wherein the monomer mixture preferably comprises said two different monomers in a total amount of at least 80 wt.%, more preferably of at least 90 wt.% with respect to the weight of the monomer mixture.

In an especially preferred embodiment, the emulsion polymer is obtainable by emulsion polymerisation of a monomer mixture comprising vinyl acetate and dibutyl maleate. It is preferred that the monomer mixture comprises vinyl acetate and dibutyl maleate in a total amount of at least 80 wt.%, more preferably in an amount of at least 90 wt.%, most preferably in an amount of at least. 95% wt.% with respect to the weight of the monomer mixture. Preferably, the weight ratio of vinyl acetate to dibutyl maleate in the monomer mixture ranges between 80:20 - 40:60, even more preferably between 70:30 - 50:50.

In another preferred embodiment, the emulsion polymer is obtainable by emulsion polymerization of a monomer mixture comprising vinyl acetate and ethylene. It is preferred that the monomer mixture comprises vinyl acetate and ethylene in a total amount of at least 80 wt.%, more preferably in an amount of at least 90 wt.%, most preferably in an amount of at least 95 wt.% with respect to the weight of the monomer mixture. Most preferably, the monomer mixture consists of vinyl acetate and ethylene. Preferably, the weight ratio of vinyl acetate to ethylene in the monomer mixture ranges between 97:3 - 70:30, more preferably between 96:4-80:20, most preferably between 95:5 and 85:15.

Further preferred emulsion polymers are defined in EP1458774, EP1541600 or EP 1469017 as incorporated by reference herein.

In each case it is preferred that the glass transition temperature (Tg) of the emulsion polymer resides between 10 and 21 °C, more preferably between 13 and 21 °C. Accordingly, good film forming properties can be achieved. The glass transition temperature of the emulsion polymer is preferably determined using a method comprising differential scanning calorimetry (DSC). In this method a film of the emulsion polymer is prepared and dried preferably at 100 °C for 1 hour immediately before measuring the Tg. The dried film is then subjected to DSC. A preferred method for determining the Tg of a polymer film is disclosed in DIN 53765, version March 1994, wherein the heating and cooling rates are preferably set at 10 K/min instead of at 20 K/min and wherein the sample size preferably ranges between 5-20 mg, especially between 5-10 mg.

The skilled person knows how, by proper selection of (the relative amounts of) monomers, the Tg, in particular the Tg of the emulsion polymer, can be varied. For example, the emulsion polymer may be selected as a homopolymer having a suitable Tg, for example as a homopolymer of vinyl propionate. However, the emulsion polymer may also be selected as, for example, a copolymer comprising a "hard" monomer and a "soft" monomer. Herein, the "hard" monomer relates to a monomer which, when converted into a homopolymer, may have a Tg > 27 °C; the "soft" monomer relates to a monomer which, when converted into a homopolymer, may have a Tg < 27 °C. An especially preferred "hard" monomer is vinyl acetate. The Tg of poly(vinyl acetate) is approx. 38 °C. An especially preferred "soft" monomer may be selected from the group consisting of di(-n-)butylmaleate, di(-n-)butylfumarate, ethylene, (n-)butylacrylate and 2-ethylhexylacrylate. The higher the amount of the "soft" monomer relative to the "hard" monomer, the lower the Tg of the polymer. Small amounts of other monomers may be further polymerized with the monomer mixture. The glass transition temperature of many different polymers is suitably listed in handbooks and review articles.

*Other embodiments of the aqueous cheese coating composition.* The protein is preferably selected from the group consisting of a casein, a caseinate, and a whey protein. The whey protein may be heat-treated and thus fully or partially de-natured.

The polysaccharide is preferably selected as starch or a starch derivative, a cellulose derivative, a gum, or a mixture thereof. The polysaccharide is most preferably selected as a gum or a cellulose derivative or as a mixture thereof. The gum is preferably selected from the group consisting of xanthan gum, guar gum, locust bean gum and gum arabic. The cellulose derivative is preferably a cellulose ether, which is preferably selected from the group consisting of an alkali metal salt of a carboxymethyl cellulose, hydroxyethylcellulose, methyl cellulose and hydroxypropylmethylcellulose.

Optional additives to the aqueous composition

In principle the sugar fatty acid ester by itself has such favourable antifungal properties, especially with regard to preventing outgrowth of *Penicillium discolour,* that no natamycin or other antifungal compounds are needed to retard fungal growth. Hence in an embodiment the aqueous composition is essentially free of natamycin.

Interestingly however, natamycin and the sugar fatty acid ester, especially a sucrose fatty acid ester, in particular sucrose monopalmitate have been found to act synergetically. Therefore if optimal antifungal properties are desired the aqueous composition preferably further comprises natamycin. If natamycin is present, its concentration in the aqueous composition is preferably 100 ppm or less, 75 ppm or less or 50 ppm or even 40 ppm or less with respect to the weight of the aqueous composition. In an embodiment, the aqueous composition may further comprise natamycin in a concentration of 5-75 ppm or 10-50 ppm with respect to the weight of the aqueous composition.

Instead of or in addition to natamycin, the aqueous composition preferably further comprises a carboxylic acid comprising 1-3 carbon atoms, and/or a salt thereof, preferably in an amount of 0.05 - 2 wt.% with respect to the weight of aqueous composition. A combination of an organic acid and/or a salt thereof together with a sugar fatty acid ester, especially with a sucrose fatty acid ester, particularly with sucrose monopalmitate can provide very good antifungal properties against *Penicillium discolour* and also other cheese spoilage fungi such as *Aspergillus versicolor.* The organic acid is preferably propionic acid.

These optional additives can be used to the same extent and with very similar effects in the aqueous cheese coating composition alike. Herein, the term "aqueous composition" as employed broadly within the context of the method according to the invention can in an aspect be equated with the term "aqueous cheese coating composition".

**EXAMPLES**

Example 1. Two common spoilage fungi for semi-hard cheese were grown on malt extract agar (MEA). The fungi were selected as a strain of *Penicillium discolour* and a strain of *Aspergillus versicolor.* Each of the fungal flora covering the grown agar plates were harvested using a spatula and suspended into an aqueous solution. After dilution with water three fungal suspensions (hereinafter called P for *Penicillium discolour* and A for *Aspergillus versicolor*) were obtained of each of the species each having a fungal concentration of approx. 103 spores/ml.

A variety of MEA agars comprising different fungicidal additives was prepared as outlined in Table 1. The pH of the agars was set to 4.8. The agars were transferred to a 6 wells plate. Each of the agars contained by the wells was contaminated with fungal spores by covering the agar surfaces with 50 microliters of each of the fungal suspensions P and A.

The resulting plates were incubated at 25 °C for 5 days, and assessed for visible outgrowth of fungi. Results were scored as follows: 0 = no visible growth, 1 = little growth, 2 = moderate growth, 3 = strong growth, 4 = completely covered with fungi. The negative control sample (contamination with P and A, no added fungicides) only scored 3 and 4.

The results are shown in Table 1.

It can be concluded that of the fatty acid derivatives employed, only sucrose palmitate is effective to retard fungal growth. The other fatty acid derivates appear to act as growth promotors to the spoilage fungi. In this test, sucrose palmitate at 4000 ppm appears at least as effective against *P. discolour* as natamycin at 50 ppm.

**Table 1. Outgrowth of spoilage fungi for cheese on MEA agar in the presence of several fatty acid derivatives.**

| Additive | *P. discolour* | | *A. versicolor* | |
|---|---|---|---|---|
| | lo *1 | hi *2 | lo *1 | hi *2 |
| None | 3 | 3 | 4 | 4 |
| Natamycin | 1 *3 | 0 | 0 | 0 |
| Tween80(HLB 15) | 4 | 4 | 4 | 4 |
| Polyglycerol-6-myristate (HLB 11) *4 | 4 | 4 | 4 | 4 |
| Sodium oleate | 4 | 3 | 4 | 4 |
| Sodium stearoyl-2-lactylate | 4 | 4 | 4 | 4 |
| Sucrose palmitate (HLB 16) *5 | 2 | 1 | 3 | 2 |

No HLB value is provided for sodium oleate and sodium stearoyl-2-lactylate, being anionic surfactants.
*1) lo = 50 ppm for natamycin, 250 ppm for the other additives
*2) hi = 250 ppm for natamycin, 4000 ppm for the other additives
*3) Unusually low score for *P. discolour* in the presence of 50 ppm natamycin. Indeed the score was 3 after incubation for 8 days.
*4) Trade name Hexaglyn 1-M, *ex* Nikkol
*5) Trade name Sisterna® PS750-C, *ex* Sistema, having sucrose monopalmitate content of 75 wt.%, remainder di, tri and polyesters.

<u>Example 2.</u> Three common spoilage fungi for semi-hard cheese were grown on malt extract agar (MEA). The fungi were selected from a strain of *Penicillium discolour,* a strain of *Aspergillus versicolor* and a strain of *Penicillium camembertii.* Each of the fungal flora covering the grown agar plates were harvested using a spatula and suspended into an aqueous solution. After dilution with water three fungal suspensions (hereinafter called PD for *Penicillium discolour,* AV for *Aspergillus versicolor* and PC for *Penicillium camembertii*) were obtained of each of the species each having a fungal concentration of approx. $10^3$ spores/ml.

A variety of MEA agars comprising different fungicidal additives was prepared as outlined in Table 2. The pH of the agars was set to 4.8. The agars were transferred to a 6 wells plate. Each of the agars contained by the wells was contaminated with fungal spores by covering the agar surfaces with 50 microliters of each of the fungal suspensions PD and AV and PC.

The resulting plates were incubated at 25 °C for 14 days, and assessed for visible outgrowth of fungi. Results were scored as follows: 0 = no visible growth, 1 = little growth, 2 = moderate growth, 3 = strong growth, 4 = completely covered with fungi. The results are shown in Table 2.

In addition to the results shown in Table 2, strong indications were obtained that a combination of 5000 ppm of propionic acid in combination with 5000 ppm of sucrose palmitate is able to completely inhibit growth of each of the three fungal species, even in the absence of natamycin.

The results clearly show that a mix of 5000 ppm of sucrose palmitate in combination with 50 ppm of natamycin is much more effective against *P. discolour* than 250 ppm of natamycin alone. From the results presented in Table 1 it is estimated that the fungicidal effect of 5000 ppm of sucrose palmitate per se against *P. discolour* may be equated with the effect of 50-100 ppm of natamycin. Thus, sucrose palmitate works synergetically with natamycin agains *P. discolour.*

Furthermore a mix of 5000 ppm of sucrose palmitate in combination with 50 ppm of natamycin is much more effective against *A. versicolor* or *P. camembertii* than 50 ppm of natamycin alone.

**Table 2. Outgrowth of spoilage fungi for cheese on MEA agar in the presence of natamycin with and without further additives.**

| Additive | *P. discolour* | *A. versicolor* | *P. camembertii* |
|---|---|---|---|
| Natamycin (50 ppm) | 3 | 3 | 3 |
| Natamycin (250 ppm) | 3 | 0 | 0 |
| Natamycin (50 ppm) + citric acid (5000 ppm) + tartaric acid (5000 ppm) | 2 | 0 | 0 |
| Natamycin (50 ppm) + sucrose palmitate* (5000 ppm) | 0 | 0 | 0 |
| Natamycin 50 ppm + citric acid 5000 ppm + tartaric acid 5000 ppm + sucrose palmitate* 5000 ppm | 0 | 0 | 0 |
| Natamycin 50 ppm + propionic acid 5000 ppm + sucrose palmitate* 5000 ppm | 0 | 0 | 0 |
| *) The sucrose palmitate was obtained as Sisterna® PS750-C, *ex* Sisterna, having sucrose monopalmitate content of 75 wt.%, remainder di, tri and polyesters. | | | |

In practice it has been found that these tests on agar have good predictive power for fungal growth on cheese, especially cheese coated with an aqueous cheese coating composition comprising the fungicidal additives.

**Claims**

1. An aqueous cheese coating composition comprising (1) an emulsion polymer of a vinylic ester and optionally further comonomer(s), in an amount of 10-60 wt.%, based on the total weight of the aqueous cheese coating composition (2) optionally natamycin in an amount of 100 ppm or less, and (3) 250-10000 ppm of a sugar fatty acid ester, with respect to the weight of the aqueous composition.

2. The aqueous cheese coating composition according to claim 1, comprising natamycin in an amount of 50 ppm or less.

3. The aqueous cheese coating composition according to claim 1, which is essentially free of natamycin.

4. The aqueous cheese coating composition according to claim 1, wherein natamycin is present in a concentration of 5 - 75 ppm with respect to the weight of the aqueous composition.

5. The aqueous cheese coating composition according according to any one of the preceding clauses wherein the sugar fatty acid ester has a HLB value ranging from 10-19, preferably from 13-17.

6. The aqueous cheese coating composition according according to any one of the preceding claims wherein the sugar fatty acid ester is a sucrose fatty acid ester.

7. The aqueous cheese coating composition according to claim 6 wherein the sucrose fatty acid ester is a sucrose ester of a fatty acid selected from the group consisting of dodecanoic acid, tetradodecanoic acid, hexadodecanoic acid, octadodecanoic acid and (9Z)-octadec-9-enoic acid.

8. The aqueous cheese coating composition according to claim 7 wherein the sucrose fatty acid ester is sucrose monopalmitate.

9. The aqueous cheese coating composition according to any one of the preceding claims wherein the emulsion polymer of a vinylic ester and optionally further comonomer(s) is present in an amount of 30-50 wt.% based on the total weight of the aqueous cheese coating composition.

10. The aqueous cheese coating composition according to claim 9 wherein said emulsion polymer of a vinylic ester and optionally further comonomer(s), is obtainable by emulsion polymerization of a monomer mixture comprising (1) vinyl acetate and dibutylmaleate, (2) vinyl acetate and ethylene, or (3) vinyl acetate and n-butylacrylate.

11. The aqueous cheese coating composition according to any one of the preceding claims, further comprising a carboxylic acid comprising 1-3 carbon atoms, and/or a salt thereof, preferably in an amount of 0.05 - 2 wt.% with respect to the weight of aqueous cheese coating composition.

12. A method for coating a cheese comprising contacting the cheese with an aqueous composition according to any one of claims 1-11.

13. The method according to claim 12, which is for reducing or preventing fungal growth on the surface of a cheese.

14. A cheese obtainable by coating said cheese with the aqueous cheese coating composition according to any one of clauses 1-11, preferably followed by drying of the aqueous cheese coating composition.

15. The method according to claim 13, which is for preventing outgrowth of *Penicillium discolor*.


**Patentansprüche**

1. Wässrige Käsebeschichtungszusammensetzung, umfassend (1) ein Emulsionspolymer eines Vinylesters und wahlweise ein oder mehrere weitere Co-Monomere in einer Menge von 10-60 Gew.-%, bezogen auf das Gesamtgewicht der wässrigen Käsebeschichtungszusammensetzung, (2) wahlweise Natamycin in einer Menge von 100 ppm oder weniger, und (3) 250-10000 ppm eines Zuckerfettsäureesters, bezogen auf das Gewicht der wässrigen Zusammensetzung.

2. Wässrige Käsebeschichtungszusammensetzung nach Anspruch 1, die Natamycin in einer Menge von 50 ppm oder weniger umfasst.

3. Wässrige Käsebeschichtungszusammensetzung nach Anspruch 1, die im Wesentlichen frei von Natamycin ist.

4. Wässrige Käsebeschichtungszusammensetzung nach Anspruch 1, wobei Natamycin in einer Konzentration von 5-75 ppm bezogen auf das Gewicht der wässrigen Zusammensetzung vorhanden ist.

5. Wässrige Käsebeschichtungszusammensetzung nach einem der vorhergehenden Ansprüche, wobei der Zuckerfettsäureester einen HLB-Wert im Bereich von 10-19, vorzugsweise 13-17, aufweist.

6. Wässrige Käsebeschichtungszusammensetzung nach einem der vorhergehenden Ansprüche, wobei der Zuckerfettsäureester ein Saccharose-Fettsäureester ist.

7. Wässrige Käsebeschichtungszusammensetzung nach Anspruch 6, wobei der Saccharose-Fettsäureester ein Saccharose-Ester einer Fettsäure ist, die ausgewählt ist aus der Gruppe bestehend aus Dodecansäure, Tetradodecansäure, Hexadodecansäure, Octadodecansäure und (9Z)-Octadec-9-ensäure.

8. Wässrige Käsebeschichtungszusammensetzung nach Anspruch 7, wobei der Saccharose-Fettsäureester Saccharose-Monopalmitat ist.

9. Wässrige Käsebeschichtungszusammensetzung nach einem der vorhergehenden Ansprüche, wobei das Emulsionspolymer eines Vinylesters und wahlweise das/die weitere(n) Co-Monomer(e) in einer Menge von 30-50 Gew.-% bezogen auf das Gesamtgewicht der wässrigen Käsebeschichtungszusammensetzung vorhanden ist/sind.

10. Wässrige Käsebeschichtungszusammensetzung nach Anspruch 9, wobei das Emulsionspolymer eines Vinylesters und wahlweise das/die weitere(n) Co-Monomer(e) durch Emulsionspolymerisation einer Monomer-Mischung erhältlich ist/sind, die (1) Vinylacetat und Dibutylmaleat, (2) Vinylacetat und Ethylen, oder (3) Vinylacetat und N-Butylacrylat umfasst.

11. Wässrige Käsebeschichtungszusammensetzung nach einem der vorhergehenden Ansprüche, die ferner eine Carbonsäure, welche 1-3 Kohlenstoffatome enthält, und/oder ein Salz davon, vorzugsweise in einer Menge von 0,05-2 Gew.-% bezogen auf das Gewicht der wässrigen Käsebeschichtungszusammensetzung, umfasst.

**12.** Verfahren zur Beschichtung von Käse, bei dem man den Käse mit einer wässrigen Zusammensetzung nach einem der Ansprüche 1-11 in Kontakt bringt.

**13.** Verfahren nach Anspruch 12 zur Verringerung oder Vermeidung von Pilzwachstum auf der Käseoberfläche.

**14.** Käse, der durch Beschichtung des Käses mit der wässrigen Käsebeschichtungszusammensetzung nach einem der Ansprüche 1-11 erhältlich ist, vorzugsweise gefolgt von einer Trocknung der wässrigen Käsebeschichtungszusammensetzung.

**15.** Verfahren nach Anspruch 13 zur Vermeidung eines Auswuchses von *Penincillium discolor*.

**Revendications**

**1.** Composition aqueuse de revêtement du fromage comprenant (1) un polymère en émulsion d'un ester vinylique et éventuellement d'un (de) comonomère(s) supplémentaire(s), en une quantité de 10 à 60 % en poids, par rapport au poids total de la composition aqueuse de revêtement du fromage (2), éventuellement de la natamycine en une quantité inférieure ou égale à 100 ppm, et (3) de 250 à 10 000 ppm d'un ester d'acide gras de sucre, par rapport au poids de la composition aqueuse.

**2.** Composition aqueuse de revêtement du fromage selon la revendication 1, comprenant de la natamycine en une quantité inférieure ou égale à 50 ppm.

**3.** Composition aqueuse de revêtement du fromage selon la revendication 1, qui est essentiellement exempte de natamycine.

**4.** Composition aqueuse de revêtement du fromage selon la revendication 1, dans laquelle la natamycine est présente en une concentration de 5 à 75 ppm par rapport au poids de la composition aqueuse.

**5.** Composition aqueuse de revêtement du fromage selon l'une quelconque des clauses précédentes dans laquelle l'ester d'acide gras de sucre présente un rapport hydro-lipophile situé dans la plage de 10 à 19, de préférence de 13 à 17.

**6.** Composition aqueuse de revêtement du fromage selon l'une quelconque des revendications précédentes dans laquelle l'ester d'acide gras de sucre est un ester d'acide gras de sucrose.

**7.** Composition aqueuse de revêtement du fromage selon la revendication 6 dans laquelle l'ester d'acide gras de sucrose est un ester de sucrose d'un acide gras choisi dans le groupe constitué de l'acide dodécanoïque, de l'acide tétradodécanoïque, de l'acide hexadodécanoïque, de l'acide octadodécanoïque et de l'acide (9Z)-octadéc-9-énoïque.

**8.** Composition aqueuse de revêtement du fromage selon la revendication 7 dans laquelle l'ester d'acide gras de sucrose est le monopalmitate de sucrose.

**9.** Composition aqueuse de revêtement du fromage selon l'une quelconque des revendications précédentes dans laquelle le polymère en émulsion d'un ester vinylique et éventuellement d'un (de) comonomère(s) supplémentaire(s) est présent en une quantité de 30 à 50 % en poids par rapport au poids total de la composition aqueuse de revêtement du fromage.

**10.** Composition aqueuse de revêtement du fromage selon la revendication 9 dans laquelle ledit polymère en émulsion d'un ester vinylique et éventuellement d'un (de) comonomère(s) supplémentaire(s), peut être obtenu par polymérisation en émulsion d'un mélange de monomères comprenant (1) de l'acétate de vinyle et du dibutylmaléate, (2) de l'acétate de vinyle et de l'éthylène, ou (3) de l'acétate de vinyle et du n-butylacrylate.

**11.** Composition aqueuse de revêtement du fromage selon l'une quelconque des revendications précédentes, comprenant en outre un acide carboxylique comprenant de 1 à 3 atomes de carbone, et/ou un sel de celui-ci, de préférence en une quantité de 0,05 à 2 % en poids par rapport au poids de la composition aqueuse de revêtement du fromage.

12. Procédé de revêtement d'un fromage comprenant la mise en contact du fromage avec une composition aqueuse selon l'une quelconque des revendications 1 à 11.

13. Procédé selon la revendication 12, qui est destiné à réduire ou à prévenir la croissance fongique à la surface d'un fromage.

14. Fromage pouvant être obtenu par revêtement dudit fromage avec la composition aqueuse de revêtement du fromage selon l'une quelconque des clauses 1 à 11, de préférence suivi du séchage de la composition aqueuse de revêtement du fromage.

15. Procédé selon la revendication 13, qui est destiné à prévenir la prolifération de *Penicillium discolor.*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1642500 A
- WO 2004082407 A
- EP 1980162 A
- EP 1458774 A
- EP 1541600 A
- EP 1469017 A

**Non-patent literature cited in the description**

- **J. T. DAVIES.** *Proc. Intl. Congress of Surface Activity,* 1957, vol. 1, 426-438